## Europäisches Patentamt
## European Patent Office
## Office européen des brevets

(11) Veröffentlichungsnummer : **0 129 038**
**B1**

(12)                    **EUROPÄISCHE PATENTSCHRIFT**

(45) Veröffentlichungstag der Patentschrift :
30.12.86

(51) Int. Cl.⁴ : **F 16 C 17/14, F 16 C 33/72**

(21) Anmeldenummer : **84105161.8**

(22) Anmeldetag : **08.05.84**

---

(54) **Lageranordnung für Lager zum Betrieb unter Wasser und in schlammartigen Medien.**

---

(30) Priorität : **15.06.83 DE 3321593**

(43) Veröffentlichungstag der Anmeldung :
**27.12.84 Patentblatt 84/52**

(45) Bekanntmachung des Hinweises auf die Patenterteilung : **30.12.86 Patentblatt 86/52**

(84) Benannte Vertragsstaaten :
**BE FR GB IT NL SE**

(56) Entgegenhaltungen :
**FR-A- 2 215 470**
**FR-A- 2 535 227**
**GB-A- 840 166**
**GB-A- 1 556 880**
**US-A- 3 552 809**

(73) Patentinhaber : **Kupczik, Günter, Dipl.-Ing.**
**Wittenbergener Weg 18**
**D-2000 Hamburg 56 (DE)**

(72) Erfinder : **Kupczik, Günter, Dipl.-Ing.**
**Wittenbergener Weg 18**
**D-2000 Hamburg 56 (DE)**

(74) Vertreter : **Kretzschmar, Otto Robert, Dipl.-Ing.**
**Beim Strohhause 34**
**D-2000 Hamburg 1 (DE)**

EP 0 129 038 B1

## Beschreibung

Die Erfindung betrifft eine Lageranordnung mit einem äußeren Lagerelement als Lagergehäuse und wenigstens einem inneren Lagerelement, das einen Bauteil aufnimmt und mit neben und außerhalb des inneren Lagerelementes spitzwinklig zur Lagerachse gerichteten, nach außen offenen Spalten, die unmittelbar zwischen an den Lagerelementen angeordneten Abdeckteilen gebildet sind, deren äußere bzw. innere einander gegenüberliegende Ränder schräg zur Lagerachse gerichtet sind.

In einer solchen Lageranordnung für eine Freilaufrolle nach der GB-A-1 556 880 sind an der Außenseite eines Wälzlagers eine auf der Welle sitzende Endkappe und eine mit der Rolle verbundene Abstandskappe angeordnet, die zwischen ihren einander zugekehrten Rändern einen schräg zur Welle nach außen divergierenden Spalt bilden. Dieser Spalt ist innen von einer Dichtung abgedeckt. In dieser Ausführung läuft der äußere Teil des Spaltes um, so daß an dieser Spaltwand liegendes Material nach außen gleiten kann. An der inneren Spaltwand befindliches Material kann in das Innere des Spaltes eindringen.

In Verbindung mit einer Labyrinthdichtung nach der US-A-3 552 809 ist bekannt, daß in dem äußeren Abschnitt des nach innen abgedichteten Labyrinthes eine Zentrifugalkraft entsteht, um den Eintritt von Fremdstoffen zu verhindern. Auch in diesem Falle läuft der äußere Teil um, so daß die Wirkung beschränkt ist.

Im übrigen ist für das Lager eine Fettschmierung vorgesehen, die einerseits gegen das Labyrinth abgedichtet ist, andererseits aber das Lager bis zu inneren Räumen durchsetzt. Hierdurch soll das Lager geschmiert werden, was aber zu einem Wärmestau und damit auch zur Zerstörung des Lagers führt.

Eine entsprechende Fettschmierung eines Lagers ist aus der GB-A-840 166 bekannt. Dabei kann das Fett durch einen senkrecht zu einer Spindel gerichteten Spalt austreten. Dieser Spalt ist durch einen schräg zur Spindel gerichteten Spalt mit dem Lagerraum verbunden.

Diese Fettschmierung des Lagers unterliegt den schon erwähnten Nachteilen. Diese bekannten Lager sind nicht unter schweren Bedingungen einsetzbar.

Im übrigen sind aus der FR-A-2 215 470 Schwenklager bekannt, deren Lagerspalte längs eines Kreisbogens um einen Mittelpunkt verlaufen, um welchen eine Pendlung zugelassen ist.

Der Einsatz einer Lageranordnung zum Betrieb unter Wasser und in schlammartigen Medien in Verbindung mit einer umlaufenden Welle unterliegt besonderen Bedingungen und erheblichen Belastungen. Insbesondere bei längerem Betrieb unter solchen Bedingungen oder auch bei Betrieb in schwerem Schlamm, wie es bei der Sielreinigung der Fall ist, ergeben sich Probleme hinsichtlich der Aufrechterhaltung der Abdichtungen bei gleichbleibenden Drehbedingungen.

Ferner ist es bekannt, Traglager gegen Wassereinbruch durch Dichtungen, insbesondere sogenannte Simmer-Ringe, zu schützen.

Als wenigstens ein inneres Lagerelement werden einbezogen Gleit- oder Wälzlager wie Rollen- und Kugellager sowie andere Lager. Solche Lagerelemente stehen unter den angegebenen Betriebsbedingungen unter erheblichen Belastungen, wobei der Aufwand der bekannten Ausführungen mit außerordentlich komplizierten Dichtungen betrieben worden ist.

Wenn von einer Welle die Rede ist, sieht eine bevorzugte Ausführung eine horizontal angeordnete Welle in einer Maschine vor. Auf der Welle ist ein Lagerelement angeordnet, auf dem ein bewegbarer Bauteil gelagert ist. Einbezogen wird auch ein an sich quasi stationäres Lager für die sich drehende Welle.

Das erwähnte Lagerelement kann in einer zweckmäßigen, bekannten Ausführung als exzenterscheibenartiges Antriebselement ausgeführt sein, und der Bauteil ist als ein auf diesem Antriebselement bewegbarer Teil vorgesehen. Bekannt ist, daß auf dem Lager- oder Antriebselement wenigstens eine Lagerbuchse zwischen den aneinandergeführten Teilen angeordnet ist.

Ein vorteilhaftes Beispiel für den Einsatz eines solchen Lagers ergibt sich aus FR-A-2 535 227 an einer Vorrichtung zur Reinigung von Sielrohren. In solchen herrschen außerordentlich ungünstige Bedingungen vor. Dabei wird eine Antriebswelle in horizontaler Anordnung durch eine Suspension aus Wasser und Verunreinigungen bewegt. Diese Welle treibt Exzenterscheiben an, durch welche hin- und hergehende Teile bewegt werden. Das sind in dieser bekannten Ausführung Fräslamellen.

Der Erfindung liegt die Aufgabe zugrunde, eine Lageranordnung der eingangs angegebenen Art dahingehend zu verbessern, daß auch bei Betrieb unter ungünstigen Einflössen mit einfachen Mitteln der Eintritt von Verunreinigungen weitgehend verhindert wird.

Diese Aufgabe wird erfindungsgemäß dadurch gelöst, daß zwei Dichtringe in jedem Spalt angeordnet sind und eine Schmierung des Spaltes zwischen den beiden Dichtringen vorgesehen ist.

Bei einer solchen Ausführung werden durch die Zentrifugalkraft des einen Wandteiles an dem schräg zur Wellenachse gerichteten Spalt beim Umlauf Kräfte ausgeübt, die schwerere Partikel im Wasser aus den Spalten herausschleudern. Hierbei erhalten abgeschleuderte Partikel beim Auftreffen auf die dem Umlaufteil bzw. Antriebsteile gegenüberliegende Spaltwand durch Reflexion eine Richtung, die zur Spaltöffnung hin daher im Sinne eines Austreibens verläuft. Die zwei Dichtringe mit Abstand vom äußeren Ende in jedem Spalt begrenzen das zusätzliche Abdichtungsmedium auf einen Spaltabschnitt und bilden einen Fanggrund für das abzuschleudernde Material. Die Schmierung erbringt ein zusätzliches Abdichtungsmedium, das insbesondere auch die Betriebsfähigkeit beim Stillstand gewährleistet.

In einer vorteilhaften Ausführung sind als Abdeckteile Abdeckscheiben am inneren Lagerelement und Halteringe am äußeren Lagerelement angeordnet, und an einen konisch gerichteten Spalt schließt sich innen ein parallel zur Lagerachse verlaufender Spaltabschnitt neben dem Lagerelement an. Wenigstens ein Dichtring ist in diesem Spaltabschnitt angeordnet.

Dabei ist ein Spalt vorteilhaft im Bereich eines zur Lagerachse parallelen und dazu schrägen Abschnittes geschmiert.

Auch ein zur Welle paralleler Spaltabschnitt führt bereits zu einer Umwirbelung des enthaltenen Mediums und verhindert ein Festsetzen.

Die Ausbildung der Spalte in Verbindung mit den Abdeckscheiben und Halteringen hat auch den Vorteil, daß schon vorhandene Lager ausgestattet werden können. Zweckmäßig sind dabei die Halteringe mit Schmierkanälen zur Spaltschmierung ausgeführt.

In einer weiteren vorteilhaften Ausgestaltung ist ein als Lagerbuchse ausgeführtes Lagerelement von zwei L-förmigen Lagerbuchsen eingefaßt, deren parallel zur Lagerachse verlaufende Schenkel Wandabschnitte von entsprechend verlaufenden Spaltabschnitten bilden. Dieses trägt zu einer einfachen Ausführung bei.

Bevorzugt wird eine Spaltbreite in der Größenordnung von 1 mm. Dieses Maß hat sich auch bei der Sielreinigung als vorteilhaft erwiesen. Dabei ergibt sich, daß größere Partikel ohnehin nicht eindringen können, aber geringeren Durchmesser aufweisende Partikel unter der sich ergebenden Zentrifugalkraft abgeschleudert werden.

Eine solche Ausführung ist vorteilhaft für vertikal oder horizontal angeordnete Wellen.

Die Erfindung wird im folgenden anhand von Ausführungsbeispielen beschrieben, die in der Zeichnung dargestellt sind.

In der Zeichnung zeigen :

Figur 1 eine Teildarstellung eines Exzenterlagers im Schnitt ;

Figuren 2 und 3 der Fig. 1 entsprechende Darstellungen mit einer Abwandlung im Aufbau des Lagers ;

Figur 4 eine im Schnitt dargestellte weitere Abwandlung des Aufbaus eines Lagers.

In allen Figuren sind gleiche Teile mit gleichen Bezugzeichen bezeichnet. Die Welle 1 ist in nicht dargestellter Weise angetrieben.

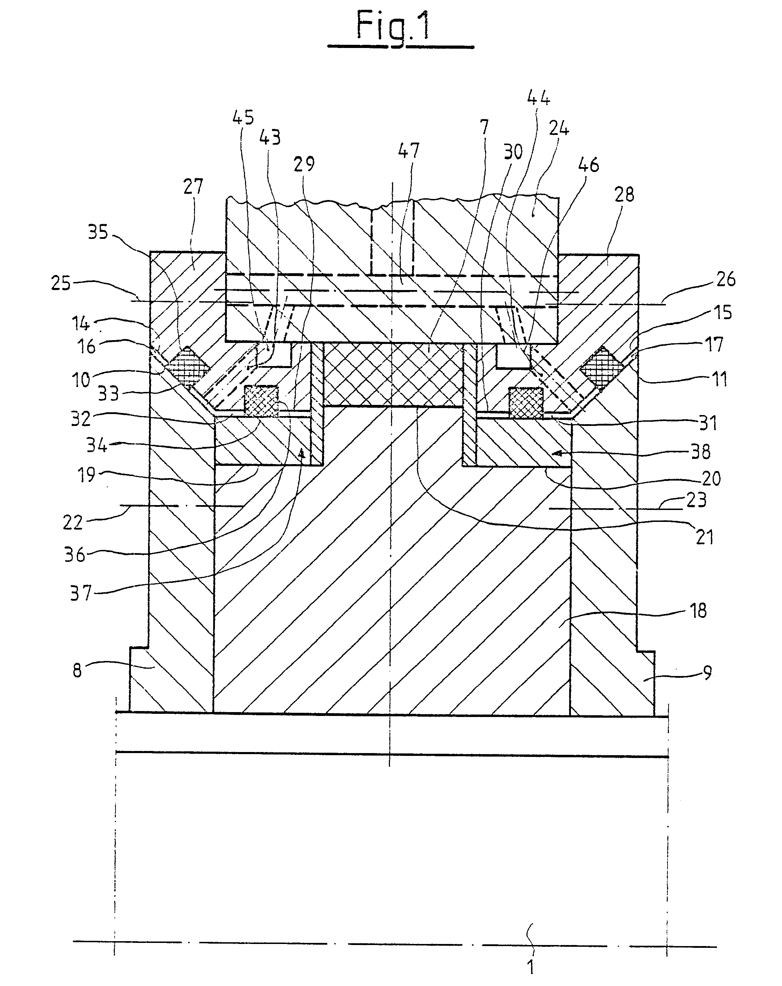

In den Figuren 1 bis 3 ist drehfest auf der Welle 1 ein exzenterscheibenartiges Antriebselement 18 angeordnet. Dieses ist im äußeren Umfang mit Schultern 19, 20 ausgeführt, zwischen denen die eigentliche Lagerfläche 21 der Exzenterscheibe angeordnet ist. Auf dieser Lagerfläche befindet sich eine Lagerbuchse 7. Es versteht sich, daß anstelle einer solchen Lagerbuchse auch ein anderes Lagermittel, wie Elemente eines Wälzlagers, angeordnet sein kann.

Gemäß den Figuren 1 bis 3 sind drehfest zur Welle 1 Abdeckscheiben 8, 9 angeordnet, deren äußere Ränder 10, 11 spitzwinklig zur Achse der Welle 1 gerichtet sind, und zwar zur Welle 1 in den Abschnitten, die von der Lagerbuchse 7 fortgerichtet sind.

Die Abdeckscheiben 8, 9 sind beispielsweise durch Verschraubung 22, 23 an dem Antriebselement 18 drehfest befestigt. Ihre von der Welle abgekehrten Ränder 10, 11 verlaufen unter einem Winkel von 45° zur Achse der Welle 1.

Auf der Lagerbuchse 7 oder entsprechenden Lagerelementen ist ein durch die Exzenterscheibe angetriebener Bauteil 24 angeordnet, der nur teilweise dargestellt ist und zumindest einen die Exzenterscheibe umfassenden Ring bildet, der beim Umlauf der Exzenterscheibe hin- und herbewegt wird. An diesem Bauteil sind durch Verschraubung 25, 26 oder entsprechende Befestigungsmittel Halteringe 27, 28 befestigt.

Die Halteringe 27, 28 sind im Hinblick auf die Lagerbuchse 7 oder entsprechende Lagermittel so bemessen, daß schräg zur Welle 1 verlaufende Wandabschnitte 14, 15 parallel zu den Rändern 10, 11 in einem Abstand von etwa 1 mm verlaufen. In der bevorzugten Ausführungsform haben die Halteringe 27, 28 auch parallel zur Welle 1 verlaufende Wandabschnitte 29, 30, die einen entsprechenden wellenparallelen Spalt an den Schultern 19, 20 bilden.

In Fig. 1 und 3 sind neben der Lagerbuchse 7 zwei weitere, im Querschnitt L-förmige Lagerbuchsen 37, 38 vorgesehen, die die Lagerbuchse 7 einfassen und mit ihren wellenparallelen Schenkeln 39, 40 (Fig. 3) wellenparallele Spaltabschnitte 31, 32 begrenzen. Diese Spaltabschnitte setzen die spitzwinklig zur Lagerachse gerichteten, nach außen offenen Spalte 16, 17 nach innen fort.

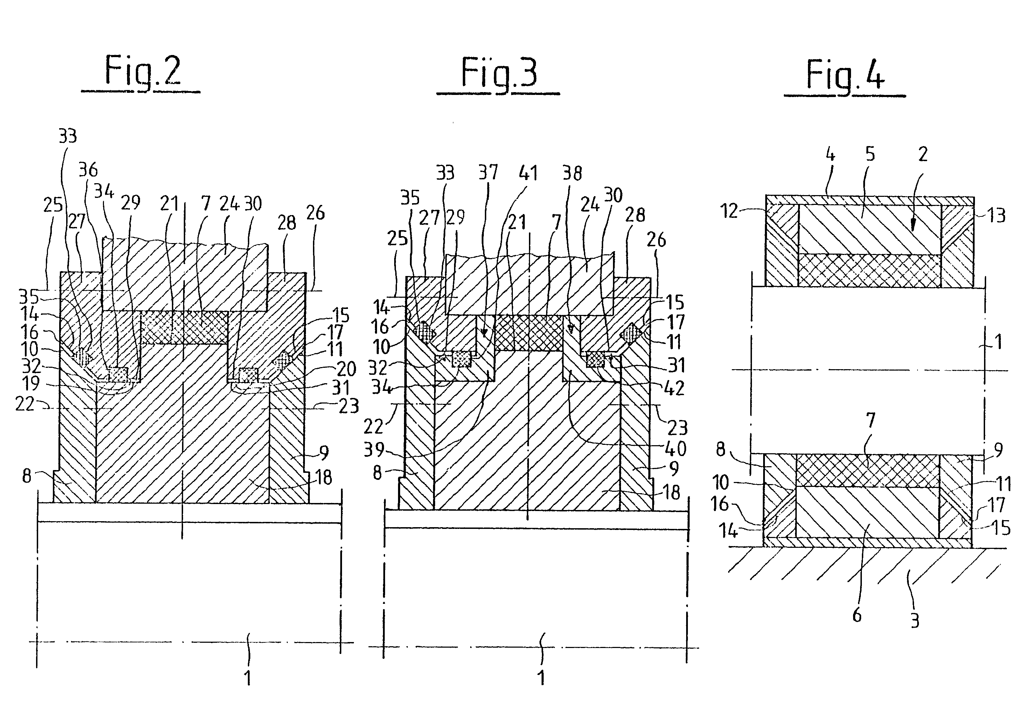

In beiden Spaltabschnitten 31, 32 sind Dichtringe 34 angeordnet, die in Kammern 36 aufgenommen sind, welche gemäß Fig. 1 und 2 in den Halteringen 27, 28 ausgebildet sind. Diese Dichtringe sind auf beiden Seiten vorgesehen und dargestellt, aber nur anhand der linken Seite beschrieben.

In Figur 3 sind die Kammern für die Dichtringe 34 anders angeordnet, worauf noch hingewiesen wird.

Entsprechend sind in den winklig gerichteten Spalten 16, 17 beidseitig Dichtringe 33 angeordnet, welche in Kammern 35 der Halteringe 27, 28 aufgenommen sind. Letztere Dichtringe sind mit Abstand vom äußeren Ende des jeweiligen Spaltes angeordnet.

Gemäß Fig. 1 sind die Spalte 16, 17, 31, 32 an ein Schmiersystem angeschlossen. Dabei sind die Abschnitte der Spalte 16, 17, 31, 32 zwischen den Dichtringen 33, 34 geschmiert. Dabei ist davon auszugehen, daß die Dichtringe 33, 34 jeweils etwa in der Mitte eines schräg zur Wellenachse verlaufenden Spaltabschnittes und eines parallel zur Wellenachse verlaufenden Spaltabschnittes angeordnet sind.

Fig. 1 zeigt, daß in die Spalte Schmierkanäle 43, 44 geführt sind, welche von Schmierkammern 45, 46 ausgehen, die von einem Schmiersystem 47 an oder in dem Bauteil 24 gespeist werden. Dabei kann auch eine Druckschmierung vorgesehen sein.

Während in Fig. 1 die L-förmigen Lagerbuchsen mit einem verhältnismäßig flachen Steg senkrecht zur Achse der Welle 1 ausgeführt sind, sind diese Lagerbuchsen 37, 38 in Fig. 3 anders ausgestaltet. In dieser Ausführung sind im übrigen in den wellenparallelen Schenkeln dieser Lagerbuchsen 37, 38 Kammern 41, 42 für die Dichtringe 34 angeordnet, welche die wellenparallelen Spaltabschnitte durchsetzen. Bei dieser Ausführung laufen die Dichtringe 34 mit um, so daß auch von ihnen Vortriebswirkungen ausgehen.

In der Ausführung nach Fig. 2 schließen sich die Halteringe 27, 28 unmittelbar an die Lagerbuchse 7 bzw. den Bauteil 24 an.

Es versteht sich, daß in den Figuren 2 und 3 nur ein anderer Aufbau gezeigt ist, der jedoch in Verbindung mit einer Schmierung gemäß Fig. 1 ausgeführt wird.

Entsprechendes gilt für Fig. 4, in welcher das Lager 2 an einem Support 3 abgestützt ist. Auf diesem Support ist ein Lagergehäuse 4 angeordnet, das in üblicher Weise aus zwei Halbschalen bestehen kann, die zusammengespannt sind. Dieser Support enthält Lagerschalen 5, 6, in welchen eine Lagerbuchse 7 läuft, die auf der Welle 1 angeordnet ist.

Gemäß Fig. 4 sind an den Lagerschalen 5, 6 bzw. dem Lagergehäuse 4 Halteringe 12, 13 befestigt, die einen Wandabschnitt 14, 15 haben, welcher parallel zu den äußeren Rändern 10, 11 verläuft, so daß Spalte 16, 17 gebildet werden, die schräg nach außen von der Lagerbuchse 7 fortgerichtet sind.

Auch in einer solchen Ausführung mit nur den spitzwinklig zur Welle 1 angeordneten Spalten 16, 17 ist eine Dichtungsanordnung in den Spaltwänden entsprechend den Figuren 1 bis 3 möglich sowie der Anschluß an ein Schmiermittelsystem, wie es anhand der Fig. 1 beschrieben ist. In diesem Falle befinden sich dann beide Dichtungen an einer Seite jeweils in einem Spalt 16 und 17. Die Fig. 4 zeigt eine besonders einfache Ausführungsform einer Wellenlagerung, die einbezogen wird.

**Patentansprüche**

1. Lageranordnung mit einem äußeren Lagerelement (4, 24) als Lagergehäuse und wenigstens einem inneren Lagerelement (7, 18), das einen Bauteil (1) aufnimmt und mit neben und außerhalb des inneren Lagerelementes spitzwinklig zur Lagerachse gerichteten, nach außen offenen Spalten (16, 17), die unmittelbar zwischen an den Lagerelementen (7, 18) angeordneten Abdeckteilen gebildet sind, deren äußere bzw. innere einander gegenüberliegende Ränder (10, 11 bzw. 14, 15) schräg zur Lagerachse gerichtet sind, dadurch gekennzeichnet, daß zwei Dichtringe (33, 34) in jedem Spalt (16, 17) angeordnet sind und eine Schmierung des Spaltes (16, 17) zwischen den beiden Dichtringen (33, 34) vorgesehen ist.

2. Lageranordnung nach Anspruch 1, dadurch gekennzeichnet, daß als Abdeckteile Abdeckscheiben (8, 9) am inneren Lagerelement (7, 18) und Halteringe (27, 28) am äußeren Lagerelement angeordnet sind, und daß sich an einen konisch gerichteten Spalt (16, 17) innen ein parallel zur Lagerachse verlaufender Spaltabschnitt (31, 32) neben dem Lagerelement (7) anschließt, und daß wenigstens ein Dichtring (34) in diesem Spaltabschnitt (31, 32) angeordnet ist.

3. Lageranordnung nach Anspruch 2, dadurch gekennzeichnet, daß ein Spalt (16, 17) im Bereich eines zur Lagerachse (1) parallelen (31, 32) und dazu schrägen Abschnittes geschmiert ist.

4. Lageranordnung nach einem der Ansprüche 1 bis 3, dadurch gekennzeichnet, daß die Halteringe (27, 28) mit Schmierkanälen (43, 44) zur Spaltschmierung ausgeführt sind.

5. Lageranordnung nach einem der Ansprüche 2 bis 4, dadurch gekennzeichnet, daß ein als Lagerbuchse ausgeführtes Lagerelement (7) von zwei L-förmigen Lagerbuchsen (37, 38) eingefaßt ist, deren parallel zur Lagerachse verlaufende Schenkel (39, 40) Wandabschnitte von entsprechend verlaufenden Spaltabschnitten (32) bilden.

6. Lageranordnung nach einem der Ansprüche 1 bis 5, gekennzeichnet durch eine Spaltbreite in der Größenordnung von 1 mm.

**Claims**

1. A bearing assembly comprising an outer bearing element (4, 24) as a bearing housing and at least one inner bearing element (7, 18) which accommodates a component (1), and comprising outwardly open gaps (16, 17), which are disposed beside and outside of the inner bearing elements and extend at an acute angle to the axis of the bearing and are directly formed between covering means arranged at the bearing elements (7, 18) and have mutually opposite, outer and inner edges (10, 11 and 14, 15), respectively, which are oblique to the axis of the bearing, characterized in that two sealing rings (33, 34) are disposed in each gap (16, 17) and means are provided for lubricating the gap (16, 17) between the two sealing rings (33, 34).

2. A bearing assembly according to claim 1, characterized in that the covering means comprise covering discs (8, 9) provided on the inner bearing element (7, 18) and retaining rings (27, 28) provided on the outer bearing element, conical gap (16, 17) is adjoined on the inside by a gap portion (31, 32), which is parallel to the axis of the bearing and disposed beside the bearing element (7), and at least one sealing ring (34) is disposed in said gap portion (31, 32).

3. A bearing assembly according to claim 2, characterized in that one gap (16, 17) is lubricated adjacent to a portion which is parallel (31, 32) to the axis (1) of the bearing and adjacent to a portion which is oblique thereto.

4. A bearing assembly according to any of claims 1 to 3, characterized in that the retaining rings (27, 28) are provided with lubricating passages (43, 44) for lubricating the gap.

5. A bearing assembly according to any of claims 2 to 4, characterized in that a bearing element consisting of a bearing element (7) is disposed between and adjoined by two L-shaped bearing bushings (37, 38), which have arms (39, 40) which are parallel to the axis of the bearing and constitute boundary surfaces of correspondingly extending gap portions (32).

6. A bearing assembly according to any of claims 1 to 5, characterized in that the gaps have a width of an order of 1 mm.

**Revendications**

1. Dispositif formant palier, avec un élément de palier extérieur (4, 24) comme corps de palier et au moins un élément de palier intérieur (7, 18) qui reçoit un élément de construction (1), et avec des interstices (16, 17) ouverts vers l'extérieur disposés à côté et à l'extérieur de l'élément de palier intérieur (7, 18) sous un angle aigu par rapport à l'axe du palier, qui sont formés directement entre des pièces de fermeture disposées au niveau des éléments de palier (7, 18) et dont les bords extérieurs et intérieurs, respectivement, tournés l'un vers l'autre (10, 11 et 14, 15), sont orientés obliquement par rapport à l'axe du palier, caractérisé en ce que deux anneaux d'étanchéité (33, 34) sont disposés dans chaque interstice (16, 17) et qu'un graissage de l'interstice (16, 17) entre les deux anneaux d'étanchéité (33, 34) est prévu.

2. Dispositif formant palier selon la revendication 1, caractérisé en ce que, comme pièces de fermeture, des rondelles de fermeture (8, 9) sont disposées au niveau de l'élément de palier intérieur (7, 18) et des anneaux de retenue (27, 28) sont disposés au niveau de l'élément de palier extérieur (4, 24) ; qu'une section d'interstice (31, 32) parallèle à l'axe du palier fait suite, à l'intérieur et à côté de l'élément de palier intérieur (7, 18), à un interstice orienté de façon conique ; et qu'au moins un anneau d'étanchéité (34) est disposé dans cette section d'interstice (31, 32).

3. Dispositif formant palier selon la revendication 2, caractérisé en ce qu'un interstice (16, 17) est graissé dans la zone d'une section (31, 32) parallèle à l'axe de l'arbre 1 et en plus oblique.

4. Dispositif formant palier selon l'une des revendications 1 à 3, caractérisé en ce que les anneaux de retenue (27, 28) sont munis de canaux de graissage (43, 44) pour le graissage des interstices.

5. Dispositif formant palier selon l'une des revendications 2 à 4, caractérisé en ce que l'élément de palier (7) réalisé sous la forme d'un coussinet est encadré de deux coussinets en forme de L (37, 38) dont les branches parallèles à l'axe du palier (39, 40) forment des sections de paroi des sections d'interstices orientées de façon correspondante (32).

6. Dispositif formant palier selon l'une des revendications 1 à 5, caractérisé en ce que la largeur des interstices est de l'ordre de grandeur de 1 millimètre.

## Fig.1

# Fig.2

# Fig.3

# Fig.4